# EUROPEAN PATENT APPLICATION

(11) **EP 3 878 777 A1**
(43) Date of publication of application: **15.09.2021**
(21) Application number: 21160966.4
(22) Date of filing: 05.03.2021
(51) Int. Cl.: B65G 47/00, B65G 47/82

(54) **GRIPPER SNORKEL ARRANGEMENT**

(30) Priority: 11.03.2020 EP 20162405
(71) Applicant: Tetra Laval Holdings & Finance S.A., 1009 Pully (CH)
(72) Inventor: BAKER, Nick, 27194 Ystad (SE); Gamst, Erik, 224 64 Lund (SE)
(74) Representative: Tetra Pak - Patent Attorneys SE

(57) **Abstract**

A gripper snorkel arrangement (100), configured for use on gripper unit (10) of a robotic arm (5) is disclosed. The gripper snorkel arrangement (100) comprises an interface plate (110) and a snorkel (120), wherein the interface plate (110) is provided with at least one hole (115) in fluid communication with an inner lumen (125) of the snorkel (120). Further to this, a gripper assembly and a method for selectively removing misplaced packaging containers is presented.

## Description

### Technical Field

The invention relates to a gripper snorkel, and in particular to a gripper snorkel arrangement being configured to operatively terminate an interface between a gripper unit and a packaging container.

### Background Art

Individual packaging containers, such as liquid food packaging containers, are typically produced from a carton-based material and filled using a high-speed filling machine. When the filled, formed, and sealed packaging containers are unloaded from the filling machine they are typically transferred to a cardboard packer in which a predetermined number of packaging containers are stacked in a packing pattern and placed in a case made from a cardboard blank, or to a wrapping machine or similar equipment that encloses groups of packaging containers.

During these operations there is a need to move the packaging containers from one location to another. For example, packaging containers need to be moved from the filling machine (or any conveyor associated thereto) to the cardboard packer (or any conveyor associated thereto).

In order to move packages from one area to another within industrial machine equipment, a robot arm can be used. The robot arm may be programmed to move in three or four dimensions. At the distal end of the robot arm, a gripper is arranged providing an interface between the machine and the packaging container.

In these fast paced manufacturing environments there will be failures and due to e.g. damaged cardboard blanks, packages falling, misalignment etc. The time to restore the production line is called Mean Time to Restore, MTTR and is crucial. Robotic solutions to restore a production line exist. However, these are typically time consuming due to difficulties in accurately removing the cause of the fault or they result in a large number of discarded production units since whole sets of units are discarded due to one or a few misplaced or damaged packaging containers. In other production environments, an operator is alerted and has to manually interact with the production line in order to get it up and running after a failure. Apart from being costly and time consuming, having operator interaction may increase the risk of contamination when handling food products.

The restoration of the production line consequently has to be fast, without human interaction and specifically to reduce the number of discarded packaging units.

There is thus a need for an improvement to a gripper unit, providing solutions or mitigations to the problems mentioned above.

### Summary

An object of the present invention is to provide a new type of machine interface termination which is improved over prior art and which eliminates or at least mitigates the drawbacks discussed above. More specifically, an object of the invention is to provide a gripper snorkel arrangement configured for use on a gripper unit of a robotic arm, such that by using the snorkel arrangement misaligned or misplaced packaging containers are removed and manufacturing line restored to a working state. These objects are achieved by the technique set forth in the appended independent claims with preferred embodiments defined in the dependent claims related thereto.

According to a first aspect, a gripper snorkel arrangement for use on a gripper unit of a robotic arm is provided. The gripper snorkel arrangement comprises an interface plate and a snorkel. The interface plate is provided with at least one hole in fluid communication with an inner lumen of the snorkel.

In one variant of the gripper snorkel arrangement, an open end of the snorkel is terminated by a flexible sealing gasket. The flexible sealing gasket provides an extension to the inner lumen of the snorkel. This is beneficial since the flexible sealing gasket is typically more flexible than the snorkel which enables the snorkel to engage with items, such as packaging containers at a higher degree of misalignment than if the sealing gasket was not used.

In a further variant of the gripper snorkel arrangement, the snorkel extends in a plane substantially parallel to a plane of the interface plate. This is useful and beneficial since it allows an interface angle between the robotic arm and an item to be substantially 90 degrees shifted when using the gripper snorkel arrangement.

In yet another variant of the gripper snorkel arrangement, the snorkel is further configured with a movable section providing an movable extension to the inner lumen of the snorkel. This is beneficial since it allows the gripper snorkel arrangement to compensate for an amount of over-travel when used to engage with packaging containers.

One variant of the gripper snorkel presents the interface plate as configured to engage with a plurality of suction cups of a gripper unit arranged on the robotic arm. The arrangement is such that at least one of said holes is in fluid communication with at least one of the plurality of suction cups and at least one other of the suction cups is used to attach the interface plate, and thereby the gripper snorkel arrangement, to the gripper unit by means of a suction force. Having the gripper unit to carry the gripper snorkel arrangement is beneficial since the gripper unit is something that can be used in normal production and this can then be configured to address issues and misplaced items by attachment of the gripper snorkel arrangement.

In a second aspect, a gripper assembly configured to be used on a gripper unit of a robotic arm, is introduced. The gripper assembly consequently comprises a gripper unit and at least one vacuum suction cup. The gripper unit is connected to the robotic arm. Furthermore, the gripper assembly comprises a gripper snorkel arrangement comprising a snorkel with an inner lumen. The gripper snorkel arrangement is operatively terminating the gripper unit. The inner lumen is arranged to be in fluid communication with said at least one vacuum suction cup of the gripper unit.

In one variant of the gripper assembly, the gripper snorkel arrangement is the gripper snorkel arrangement in any variant or aspect previously presented.

In a third aspect, a method for selectively removing a misplaced packaging container from a misplacement location is disclosed. The method comprises connecting a gripper snorkel arrangement to a robotic arm, and thereby forming a gripper assembly. Further, the method comprises moving the robotic arm to position the gripper snorkel arrangement proximate to the misplaced packaging container, and gripping the misplaced packaging container by applying a suction force by means of the gripper snorkel arrangement. The method also comprises moving the robotic arm while gripping said misplaced packaging container to position the misplaced packaging container at a location distanced from the misplacement location, and releasing the misplaced packaging container by de-activating the suction force.

In one variant of the method, the misplacement location is at a secondary package. This is beneficial since this allows the selective removal of misaligned, damaged or misplaced packaging containers form the secondary package.

In another variant of the method, the misplacement location is at a conveyor. This is beneficial since this allows the selective removal of misaligned, damaged or misplaced packaging containers form the conveyor.

In yet another variant of the method, the step of connecting the gripper snorkel arrangement to the robotic arm comprises moving the robotic arm to an idle location of the gripper snorkel arrangement. This is beneficial since the gripper snorkel arrangement may be securely stored at the idle location when not used by the robotic arm.

In a further variant of the method, it further comprises disconnecting the gripper snorkel arrangement from the robotic arm. This is beneficial since it frees the robotic arm to commence whatever task it was performing prior to starting the method.

In an even further variant of the method it further comprises, before the step of disconnecting the gripper snorkel arrangement, returning the robotic arm to the idle location of the gripper snorkel arrangement. This is beneficial since the gripper snorkel arrangement may be securely stored at the idle location when not used by the robotic arm.

In another variant of the method, the gripper snorkel arrangement is the gripper snorkel arrangement as previously presented and/or the gripper assembly is the gripper assembly as previously presented.

In a fourth aspect, a non-transitory computer-readable storage medium is presented. The non-transitory computer-readable storage medium is storing one or more programs configured for execution by one or more processors, the one or more programs comprising instructions for performing the method according to any variant or aspect previously presented.

### Brief Description of the Drawings

Embodiments of the invention will be described in the following; references being made to the appended diagrammatical drawings which illustrate non-limiting examples of how the inventive concept can be reduced into practice.
Fig. 1 is a schematic view of a production line;
Figs. 2a-d are schematic views of gripper units;
Figs. 3a-c are views of gripper snorkel arrangements according to embodiments of the invention;
Fig. 4 is a cross-sectional view of a gripper assembly according to embodiments of the invention;
Fig. 5 is a schematic view of a method according to embodiments of the invention;
Fig. 6 is a schematic view of a non-transitory computer-readable storage medium according to embodiments of the invention.

### Detailed description

Hereinafter, certain embodiments will be described more fully with reference to the accompanying drawings. The invention may, however, be embodied in many different forms and should not be construed only as limited to the embodiments set forth herein; rather, these embodiments are provided by way of example so that this disclosure will be thorough and complete, and will fully convey the scope of the invention to those skilled in the art, such as it is defined in the appended claims, to those skilled in the art.

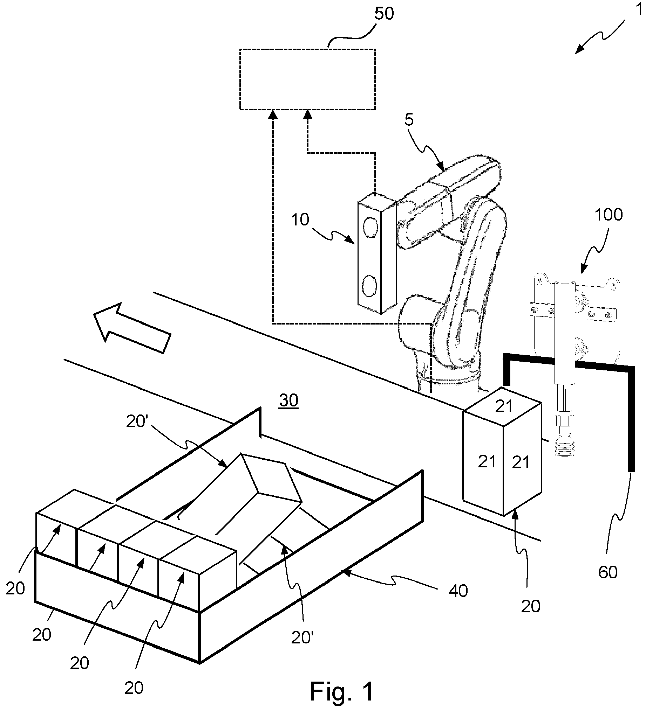

Starting from Fig. 1, a schematic view of a production line 1 is shown. A robotic arm 5 comprising a gripper unit 10 is depicted according to an embodiment. The gripper unit 10 is provided on the distal end of the robotic arm 5. In the embodiment in Fig. 1, the robotic arm 5 is a delta robot, or an articulated robot having at least three rotary joints. Articulated robots, as well as delta robots, are well known in the art and will not be described further herein.

The robotic arm 5 is arranged in a machine environment exemplified, such as between a filling machine and secondary package 40 or other type of equipment. The term "secondary package" should be construed as packaging intended to contain one or more packaging containers filled with a product. One non-limiting example is the production line 1 of Fig. 1. In such example, the robotic arm 5 is provided in order to move individual packaging containers 20, being folded, filled and silled by the filling machine and discharged therefrom by means of a conveyor 30. The packaging containers 20, which typically are formed with at least one planar panel 21, are gripped by the robotic arm 5 as they are transported on the conveyor 30, and moved to the secondary package 40. It should be noted that the planar panels 21 of the packaging containers 20 may not necessarily form an entire side of the packaging container 20, but should preferably form a planar surface big enough to be gripped by the gripper unit 10.

The robotic arm assembly 5 is configured to operate at very high speed; from an idle position, it must be capable of performing the following motion sequence: arranging the gripper unit 10 in close proximity to the approaching packaging container 20, activating the gripper unit 10 in order to attach the packaging container 20 to the gripper unit 10, moving the gripper unit 10 and the attached packaging container 20 to the desired position, releasing the packaging container 20 by deactivating the gripper unit 10 and returning to the idle position.

A controller 50 is therefore provided and connected to the gripper unit 10 in order to control activation and deactivation of the gripper unit 10. In some embodiments, the controller 50 is also in communication with the robotic arm 5.

The controller 50 preferably comprises a non-transitory computer-readable storage medium, storing one or more programs configured for execution by one or more processors, the one or more programs comprising instructions for controlling the gripper unit 10.

The gripper unit 10 may be any suitable gripping means for interfacing with the planar panel 21 of a packaging container 20. In one embodiment, the gripper unit 10 is realized as a device capable of exerting a controllable suction or vacuum at the planar panel 21 of a packaging container 20. The control of the suction/vacuum may be in a straight forward on/off manner meaning the vacuum suction is activated and deactivated. In the coming sections, a comparably more advanced embodiment of the gripper unit 10 will be disclosed, at it should be emphasized that this comparably more advanced gripper unit is not mandatory for implementing the disclosed invention.

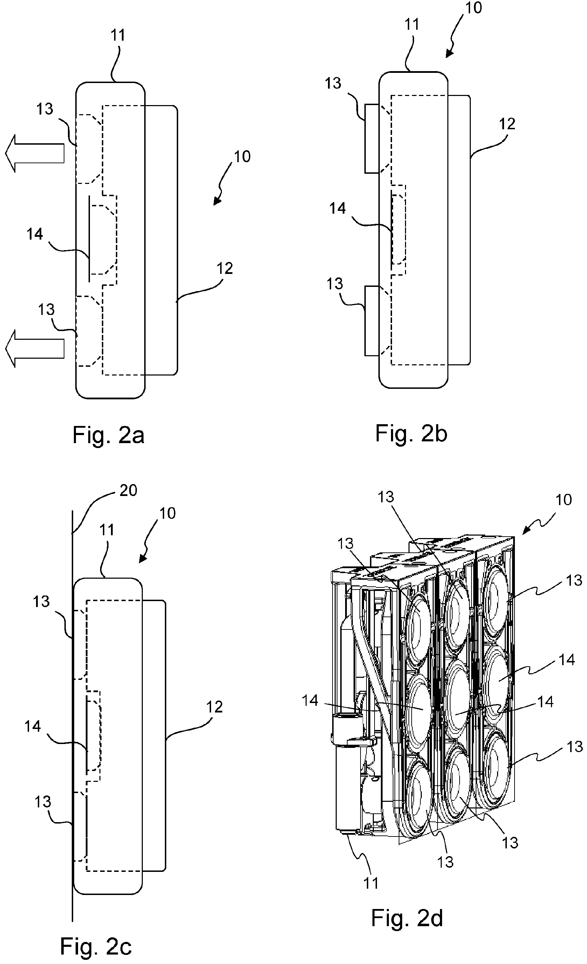

Now turning to Figs. 2a-d further details of the gripper unit 10 are shown. The gripper unit 10 is preferably a vacuum gripper unit 10 being capable of engaging an adjacent packaging container 20 by applying a suction force using one or more vacuum cups 13.

The gripper unit 10 comprises a housing 11 and a vacuum distribution unit 12. The vacuum distribution unit 12 is moveable in relation to the housing 11 and comprises at least one suction cup 13. In the shown example, the vacuum distribution unit 12 comprises two spaced apart suction cups 13 for attaching to the packaging container 20 by applying vacuum, and one control suction cup 14.

All suction cups 13, 14 are preferably activated simultaneously. This is particularly the case when the suction cups 13, 14 share a common air supply. By activation of the control suction cups 13, 14, the vacuum distribution unit 12 is moved towards the housing 11, in the direction indicated by the block arrows in Fig. 2a. Hence, the vacuum distribution unit 12 is moved from an idle position (shown in Fig. 2a) to an active position (shown in Fig. 2b). When the vacuum distribution unit 12 is in the active position, the suction cups 13 are arranged in an extended position, i.e. the distal end of each suction cup 13 is arranged outside the housing 11.

In the active position, as shown in Fig. 2b, the gripper unit 10 is ready to grip a packaging container 20. As vacuum is applied upon activation of the suction cups 13, 14, a suction force is generated in each suction cup 13, 14 thereby pulling the packaging container, as shown in Fig. 2c towards the housing 11. Due to the flexible material of the suction cups 13, the planar panel 24 of the packaging container will be in contact, and flush with, the housing 11.

The gripper unit 10 is used to collate individual packaging containers 20 while they are in motion, necessitating the activation of the suction cups 13. The vacuum operated suction cups 13 need to engage with the packaging containers that they are picking in order to attain a seal, and therefore a robust grip.

Should the suction cup 13 stand out from the housing 11 (and ready to contact a packaging container), it would possibly impede the collection of the packaging container. Thus, the gripper unit 10 described herein is configured to retract the suction cups 13, leaving a "clean" housing surface that does not impede packaging container movement.

In fact, the suction cups 13 are controlled to protrude to ensure the suction cups 13 meet the packaging container before the housing 11. The suction cups 13 are retracted by cutting off air supply to vacuum generators (not shown), in order to ensure the suction cups 13 do not interfere with packaging containers 20 being placed.

In the embodiment shown in Figs. 2a-c, three vacuum cups 13, 14 are employed and mounted together on the common vacuum distribution unit 12. Two suction cups 13 are configured to grip the packaging container 20, and the third suction cup 14 acts as an actuator to pull the vacuum distribution unit 12 forwards.

During operation, placement of the packaging container will be stable as the suction cups 13 withdraw from the packaging container, into the housing 11, as the vacuum is released. This is achieved by de-activating the control suction cup 14 and the suction cups 13 simultaneously, whereby the vacuum distribution unit 12 is allowed to return to its idle position of Fig. 2a.

In Fig. 2d, a perspective view of a gripper unit 10 according to one non-limiting embodiment is shown. In this embodiment, the gripper unit 10 is formed with six suction cups 13 and three actuator suction cups 14. The suctions cups 13 arranged in two horizontal groups, one vertically aligned above the other, of three suctions cups 13 each. The three actuator suction cups 14 are horizontally arranged between the two horizontal groups of suction cups 13. The suction cups 13,14 may be controlled individually, in vertical or horizontal pairs or triplets. The exemplified arrangement of the suction cups 13, 14 in Fig. 2d is provided in order to emphasize the freedom with which the gripper unit 10 can be configured and should not be considered as limiting but rather as inspiring in the formation of the gripper unit 10.

From the above, it can be deduced that the gripper unit 10 is adapted to engage with a panel 21 of a packaging container 20 at a predetermined angle. This is the normal mode of operation and works fluently and well until there is a misalignment of the packaging container 20. A misaligned packaging container 20 will be referred to as a misplaced packaging container 20' and this is to comprise all packaging containers 20' placed in such a way, or in such a location, that they can't be gripped directly by the gripper unit 10. Returning to Fig. 1, the secondary package 40 is shown as comprising a number of misplaced packaging containers 20'. The misplaced packaging containers 20' will hinder the process of moving packaging containers 20 from the conveyer 30 to the secondary package 40. Consequently, the misplaced packaging containers 20' will have to be removed before the moving of packaging containers 20 can progress further. The time this restoration takes, must, as explained earlier, be short and preferably without human interaction. The example given with Fig. 1 shows the misplaced packaging containers 20' as located in the secondary package, naturally, the misplaced packaging containers 20' may be located anywhere and the location of the misplaced packaging containers 20' will, at times, be referred to as a misplacement location 30, 40. To further exemplify, the misplaced packaging containers 20' may be located anywhere such that they hinder, interfere with or otherwise adversely affect the production process, e.g. the secondary package 40 or the conveyor 30.

Staying with Fig. 1, the inventors behind this disclosure have realized that an interface capable of engaging with the packaging containers 20 and the misplaced packaging containers 20' at an angle different from the angle of approach of the gripper unit 10 would solve the abovementioned problems. By forming an interface by arranging a gripper snorkel arrangement 100 between the gripper unit 10 and the containers 20, 20', the misplaced packaging containers 20' can be selectively removed from their respective misplacement locations 30, 40. In Fig. 1, the gripper snorkel arrangement 100 is shown supported by an optional support structure 60. This support structure may be any means or structure suitable for storing the gripper snorkel arrangement 100 when it is not used, the location of the gripper snorkel arrangement 100 when it is not used, i.e. when it is idle, may occasionally be referred to as an idle location 60. The idle location 60 is typically located in the proximity of and within reach of the robotic arm 5.

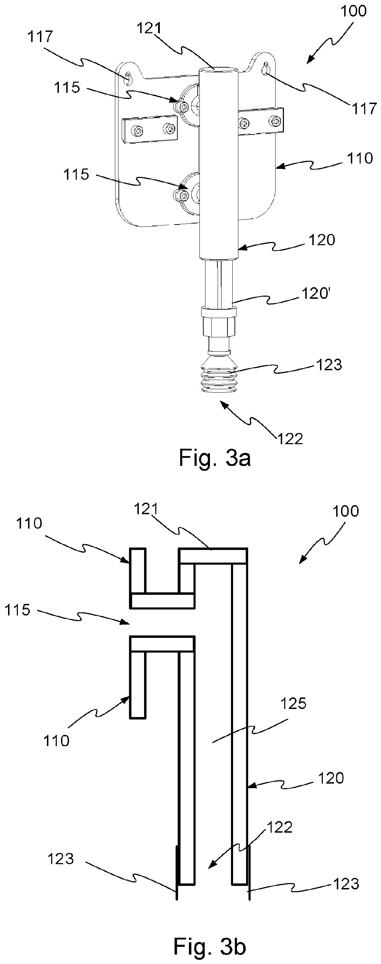

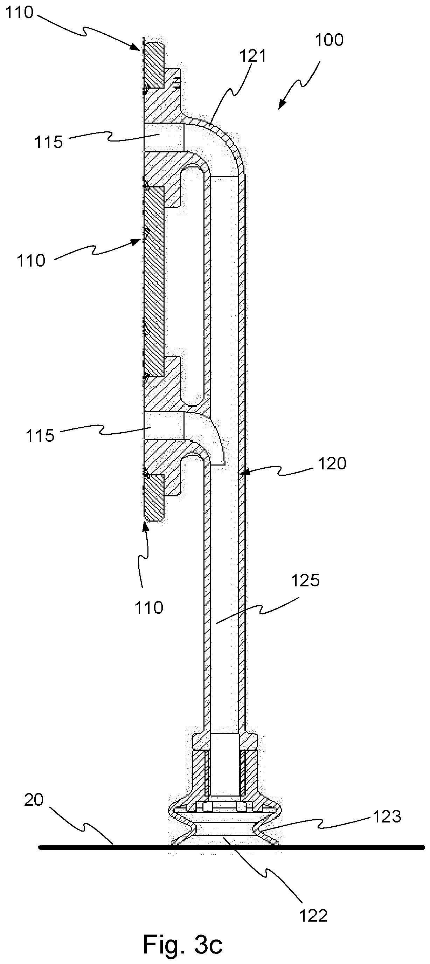

Turning to Figs. 3a to 3c, the gripper snorkel arrangement 100 is shown according to embodiments of the invention. The gripper snorkel arrangement 100 comprises an interface plate 110 provided with one or more holes 115. The holes 115 are through holes 115 and may be have any suitable shape or form. In one embodiment, the holes 115 are substantially circular and in another embodiment, the holes 115 are substantially square. In Fig. 3a, the gripper snorkel arrangement 100 is shown with two substantially vertically spaced-apart holes 115, but any number and arrangement of holes 115 may be used. The gripper snorkel arrangement 100 further comprises a snorkel 120. The snorkel 120 is in Fig. 3a shown as extending in a plane substantially parallel to a plane of the interface plate 110, but the snorkel 120 may be arranged to extend in a plane at any suitable angle relative to the interface plate 110. In Fig. 3b, a simplified cross-sectional view of the snorkel 120 is shown. The snorkel 120 is provided with an inner lumen 125, formed along the extension of the snorkel 120. The holes 115 provided in the interface plate 110 are in fluid communication with the lumen 125 of the snorkel 120. The snorkel 120 may be configured with an open end 122 and a closed end 121. This means that fluid may flow between the open end 122 and the hole 115 such that a suction force applied to the hole 115 is transferred to a suction force at the open end 122. By applying such a suction force at the hole 115, the gripper snorkel arrangement 100 may be used to selectively grip misplaced packaging containers 20' which would be difficult, or even impossible, to grip with the gripper unit 10 directly. Fig. 3c is similar to Fig. 3b, but depicts the gripper snorkel arrangement 100 according to an embodiment with two holes 115. In Fig. 3c, the gripper snorkel arrangement 100 is shown interfacing with a packaging container 20.

The open end 122 of the snorkel 120 may, in embodiments, be provided with a sealing gasket 123. The sealing gasket 123 is arranged to extend the inner lumen 125 of the snorkel 120. The sealing gasket 123 will enable the gripper snorkel arrangement 100 to grip misplaced packaging containers 20' who do not present a panel 21 aligned with the open end 122 of the snorkel 120. Preferably, the sealing gasket 123 is made from a flexible material. The flexibility of the material, the dimensions of the snorkel 120 and the amount of extension the sealing gasket 123 provided to the inner lumen 125 of the snorkel will contribute in determining the allowable misalignment between the open end 122 of the snorkel 120 and the panel 21 to be engaged with on the misplaced packaging container 20'. Consequently, virtually any misalignment of the misplaced packaging container 20' is allowed when the gripper snorkel arrangement 100 is used to selectively remove misplaced packaging containers 20'.

The fluid connection between the holes 115 and the inner lumen 125 of the snorkel 120 can be used to also mechanically fasten the snorkel 120 to the interface plate 110. There may be any number of holes and as seen in the exemplary embodiment of Fig. 3a, the interface plate 110 may be provided with two holes 115 and this will provide a secured fastening of the snorkel 120 to the interface plate 120 together with allowing fluid to flow unhindered between the holes 115 and the inner lumen of the snorkel 120. The fluid communication between the holes 115 and the snorkel 120 may very well be achieved by a structure not providing a mechanical support for the snorkel 120. In such optional cases, separate fastening means 117 will be necessary in order to secure the snorkel 120 to the interface plate 110. These separate fastening means 117 allow the gripper snorkel arrangement 100 to be used with a gripper unit 10 not having individually controlled suction cups 13. Such a combination would otherwise result in the gripper snorkel arrangement 100 being dropped as the suction force of the suction cups 13 is removed or reduced in order to drop a packaging container 20. It may very well be that the snorkel 120 is flexibly attached to the interface plate 110 to allow a certain degree of movement of the snorkel 120 in relation to the interface plate 110. This may allow the gripper snorkel arrangement to engage with panels 21 being misaligned in relation to the open end 122 of snorkel 120. This may very well be combined with the sealing gasket 123 in order to further increase the flexibility of the snorkel 120.

In one embodiment of the snorkel arrangement 100, the snorkel 120 is configured with a movable section 120'. The movable section 120' is movable along a direction of the extension of the snorkel 120. The movable section 120' is part of the snorkel and extends the inner lumen 125 of the snorkel 120. The movable section 120' is movable in relation to the interface plate 110 of the gripper snorkel arrangement 100. The movable section 120' is movable such that it moves along the inner lumen 125 of the snorkel 120 and may be arranged partly inside the snorkel 120, where it will be movable to be located more or less inside the snorkel, i.e. provide more or less extension to the inner lumen 125 of the snorkel 120. The movable section 120' may be spring loaded such that when a force is applied in the extension direction of the snorkel 120, the movable section 120' is compressed into the snorkel 120 such that a length of the snorkel 120 is reduced and a spring is biased. When the force is reduced or removed, the spring releases its tension and the movable section 120' returns to its previous position. Optionally, the movable section 120' may be placed at an extended position by gravitational force. The feature of the movable section 120' is beneficial, since it allows the snorkel 120 to be deformed along its extension axis when e.g. an over-travel occurs in relation to a packaging container 20, 20' to be removed.

The gripper snorkel arrangement 100 may be used as an alternative interface between the robotic arm 5 and a packaging container 20 or a misplaced packaging container 20'. This may be achieved by having the robotic arm provided with an interface that can attach the gripper snorkel arrangement 100. The attachment may be achieved by means of e.g. clamping or hooking. In one embodiment, the gripper snorkel arrangement 100 is attached to the robotic arm by means of suction cups 13. These suction cups 13 may be provided on a gripper unit 10 as previously presented. Other devices may be used and the gripper unit 10 should be seen as one possible enablement. However, the gripper unit 10 will be used to exemplify one way of attaching the gripper snorkel arrangement 100 to the robotic arm 5.

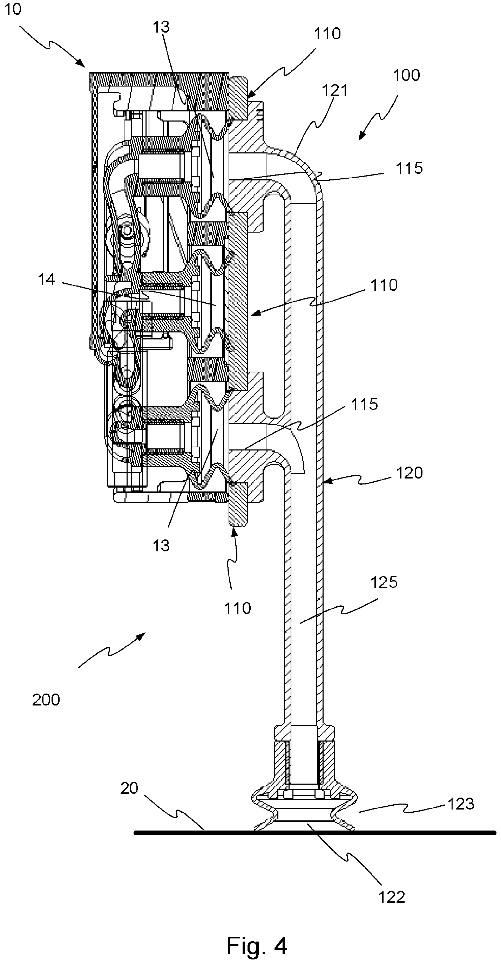

Fig. 4 depicts a cross sectional view of a gripper assembly 200 comprising the gripper snorkel arrangement 100 attached to the gripper unit 10. Suction cups 13 of the gripper unit 10 are aligned to interface with the holes 115 of the interface plate 110. The suction cups 13 interfacing with the holes 115 may be used to provide a suction force that is transferred from the suction cups 13 to the open end 122 of the snorkel 120 via the holes 115 and the inner lumen 125 of the snorkel 120. Not shown in Fig. 4, there may be suction cups 13 comprised in the gripper unit 10 interfacing with sections of the interface plate 110 not being provided with holes 115. Since the interface plate 110 is substantially planar, these suction cups 13 will attach the snorkel arrangement to the gripper unit by means of suction. The control suction cup 14 in Fig. 4 may of course be replaced with a normal suction cup 13 used for providing an attachment means. If the gripper snorkel arrangement of Fig. 4 would have been provided with only one hole 115, one of the suction cups 13 shown in Fig. 4 would provide suction force to the open end 122 of the snorkel 120 and the other would provide suction for fastening the gripper snorkel arrangement 100 to the gripper unit 10. The gripper unit 10 may be configured to control the suction cups 13 individually or in groups, such that that the attachment of the gripper snorkel arrangement 100 to the gripper unit 10 can be controlled independently of the suction force provided to the open end 122 of the snorkel 120. This is beneficial since it enables the snorkel 120 to drop packaging containers 20, 20' without the gripper snorkel arrangement 100 being detached from the gripper unit 10. The gripper assembly 200 of Fig. 4 is, for illustrative purposes, shown engaging with a packaging container 20, needless to say, this may alternatively be a misplaced packaging container 20'.

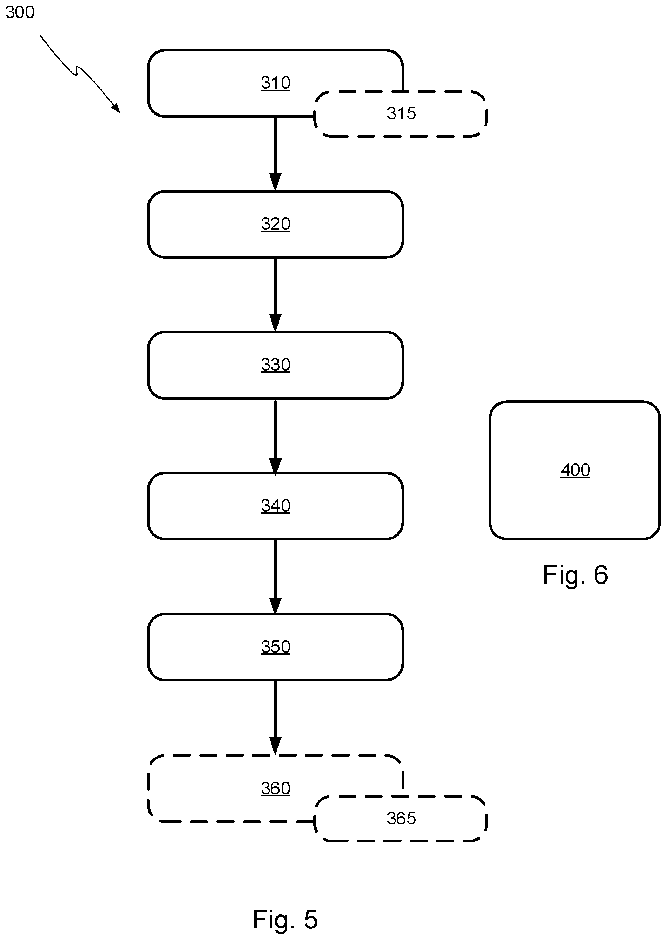

With reference to Fig. 5, a method 300 for selectively removing a misplaced packaging container 20' from a misplacement location 30, 40 will be described. As mentioned earlier, the misplacement location 30, 40 is exemplified as the area of the conveyor 30 or the secondary package 40, but the skilled person realizes that the misplacement location 30, 40 may be any location within reach of the robotic arm 5 from where a misplaced packaging container 20', a packaging container 20 or any unwanted item is to be removed. The method 300 may be initiated in numerous ways and one may by the detection of misplaced packaging containers 20'.

Upon initiation, the gripper snorkel arrangement 100 is connected 310 to the robotic arm 5. If the robotic arm 5 is provided with a gripper unit 10, this forms a gripper assembly 200 attached to the robotic arm 5. The connection 310 of the gripper snorkel arrangement may be achieved by applying a suction force at areas of the interface plate 110 of the gripper snorkel arrangement 100 not being provided with holes 115. In embodiments of the method 300, wherein the robotic arm 5 being provided with a gripper unit 10, the gripper unit 10 is used to connect 310 the gripper snorkel arrangement as detailed in previous sections. As mentioned earlier, the gripper snorkel arrangement 100 may, before connecting 310 to the robotic arm 5, be located at the idle location 60. In such embodiments, the step of connecting 310 the gripper snorkel arrangement 100 to the robotic arm may comprise moving 315 the robotic arm 5 to the idle location 60 of the gripper snorkel arrangement 100 before connecting 310 the gripper snorkel arrangement 100.

With the gripper snorkel arrangement 100 attached to the robotic arm 5, the robotic arm 5 is moved 320 to position the gripper snorkel arrangement 100 proximate to the item to be moved. As mentioned, the item to be moved may be e.g. a misplaced packaging container 20', a packaging container 20 or any form or debris interfering with desired operation. In one embodiment of the method 300, the item to be moved is a misplaced packaging container 20'.

The item to be moved is gripped 330 in order to be able to move it away from its misplacement location 30, 40. The gripping 330 is typically enabled by applying a suction force by means of the gripper snorkel arrangement 100. In one embodiment of the method 300, this is achieved as explained earlier, by having the gripper unit 10 apply suction force by means of suction cup(s) 13 arranged at the holes 115 of the gripper snorkel arrangement 100.

The robotic arm 5, now gripping 330 the item to be moved, is moved 340 to position the item to be moved at a location where the item may be placed without interfering with the production process. The location is typically a location remote from the misplacement location 30, 40. The location may be any suitable location e.g. a floor of the facility housing the production line 1, the location of a garbage container, the location of a container for goods to be manually handled etc. In other embodiments, a chute may be present, where the packaging containers 20, 20' may be dropped. This would allow an operator or other robotic arm to select undamaged package containers 20, 20' and return them to production flow.

At the location where the item may be placed without interfering with the production process, the item to be moved is released 350 from the gripper snorkel arrangement 100. This is achieved by de-activating the suction force such that the item to be moved is released. In the embodiment of method 300, wherein the gripper unit 10 applies suction force by means of suction cup(s) 13, this is achieved by the gripper unit 10 reducing or removing the suction force from the suction cup(s) 13 arranged at the holes 115 of the gripper snorkel arrangement 100.

The method 300 may further comprise the step of disconnecting 360 the gripper snorkel arrangement 100 from the robotic arm 5. In embodiments wherein the robotic arm 5 comprises the gripper unit 10, this may be achieved by the gripper unit reducing or removing the suction force that is applied to areas of the interface plate 110 of the gripper snorkel arrangement 100 not being provided with holes 115. The step of disconnecting 360 the gripper snorkel arrangement 100 may, in embodiments wherein the gripper snorkel arrangement was initially located at the idle location 60, comprise moving the robotic arm 5 to position the gripper snorkel arrangement at the idle location 50 prior to disconnecting 360 the gripper snorkel arrangement 100.

In one embodiment, the location where the item may be placed without interfering with the production process and the idle location 60 of the gripper snorkel arrangement 100 are proximate to one another. In this embodiment, the step of releasing 350 the item to be moved and disconnecting the gripper snorkel arrangement 100 can be combined to further reduce the time it takes to restore the production line 1.

It should be noted that the method 300 described with reference to Fig. 5 is an overview and the skilled person realizes, after reading this disclosure that there may be further beneficial details and steps that are not explicitly shown or described with reference to Fig. 5. It should be understood that the method 300 is possible to adjust and alter such that it can be used with all embodiments and examples detailed in this disclosure.

In Fig. 6, a non-transitory computer-readable storage medium 400 is shown. In one embodiment of the storage medium 400, it is storing one or more software programs configured for execution by one or more processors. The one or more software programs comprising instructions for performing the method 300 as previously presented.

## Claims

1. A gripper snorkel arrangement (100), configured for use on a gripper unit (10) of a robotic arm (5), the gripper snorkel arrangement (100) comprising an interface plate (110) and a snorkel (120), wherein the interface plate (110) is provided with at least one hole (115) in fluid communication with an inner lumen (125) of the snorkel (120).

2. The gripper snorkel arrangement (100) of claim 1, wherein an open end (122) of the snorkel (120) is terminated by a flexible sealing gasket (123) providing an extension to the inner lumen (125) of the snorkel (120).

3. The gripper snorkel arrangement (100) of any of the preceding claims, wherein the snorkel (120) extends in a plane substantially parallel to a plane of the interface plate (110).

4. The gripper snorkel arrangement (100) of any of the preceding claims, wherein the snorkel (120) is further equipped with a movable section (120') providing an movable extension to the inner lumen (125) of the snorkel (120).

5. The gripper snorkel arrangement (100) of any of the preceding claims, wherein the interface plate (110) is configured to engage with a plurality of suction cups (13) of a gripper unit (10) arranged on the robotic arm (5), such that at least one of said holes (115) is in fluid communication with at least one of the plurality of suction cups (13) and at least one other of the suction cups (13) is used to attach the interface plate (110), and thereby the gripper snorkel arrangement (100), to the gripper unit (10) by means of a suction force.

6. A gripper assembly (200) configured for use on a gripper unit (10) of a robotic arm (5), comprising
a gripper unit (10) comprising at least one vacuum suction cup (13), wherein the gripper unit (10) is connected to the robotic arm (5), and
a gripper snorkel arrangement (100) comprising a snorkel (120) with an inner lumen (125), wherein the gripper snorkel arrangement (100) is operatively terminating the gripper unit (10),
wherein the inner lumen (125) is arranged to be in fluid communication with said at least one vacuum suction cup (13) of the gripper unit (10).

7. The gripper assembly (200) of claim 6, wherein the gripper snorkel arrangement (100) is the gripper snorkel arrangement (100) of any of the claims 1 to 5.

8. A method (300) for selectively removing a misplaced packaging container (20') from a misplacement location (30, 40), comprising:
connecting (310) a gripper snorkel arrangement (100) to a robotic arm (5) forming a gripper assembly (200),
moving (320) the robotic arm (5) to position the gripper snorkel arrangement (100) proximate to the misplaced packaging container (20'),
gripping (330) the misplaced packaging container (20') by applying a suction force by means of the gripper snorkel arrangement (100),
moving (340) the robotic arm (5) while gripping said misplaced packaging container (20') to position the misplaced packaging container (20') at a location distanced from the misplacement location (30, 40),
releasing (350) the misplaced packaging container (20') by de-activating the suction force.

9. The method (300) of claim 8, wherein the misplacement location (40) is at a secondary package (40).

10. The method (300) of claim 8, wherein the misplacement location (30) is at a conveyor (30).

11. The method (300) of any of the claims 8 to 10, wherein the step of connecting (310) the gripper snorkel arrangement (100) to the robotic arm (5), comprises moving (315) the robotic arm (5) to an idle location (60) of the gripper snorkel arrangement (100).

12. The method (300) of any of the claims 8 to 11, further comprising disconnecting (360) the gripper snorkel arrangement (100) from the robotic arm (5).

13. The method (300) of claim 12 when depending on claim 11, further comprising, before the step of disconnecting (360) the gripper snorkel arrangement (100), returning (365) the robotic arm (5) to the idle location (60) of the gripper snorkel arrangement (100).

14. The method (300) of any of the claims 7 to 13, wherein the gripper snorkel arrangement (100) is the gripper snorkel arrangement (100) of any of the claims 1 to 5 and/or wherein the gripper assembly (200) is the gripper assembly (200) of any of the claims 6 or 7.

15. A non-transitory computer-readable storage medium (400), storing one or more software programs configured for execution by one or more processors, the one or more software programs comprising instructions for performing the method of any of the claims 8 to 14.
